Europäisches Patentamt

European Patent Office

Office européen des brevets

(11) Veröffentlichungsnummer: **0 245 780 B1**

# (12) EUROPÄISCHE PATENTSCHRIFT

(45) Veröffentlichungstag der Patentschrift: **04.12.91**

(21) Anmeldenummer: **87106642.9**

(22) Anmeldetag: **07.05.87**

(51) Int. Cl.⁵: **A01G 23/06, A01B 35/00, A01D 43/12**

(54) **Verfahren und Vorrichtung zum Bearbeiten von bepflanzbaren Böden, insbesondere von Waldböden.**

(30) Priorität: **13.05.86 DE 3616072**

(43) Veröffentlichungstag der Anmeldung:
**19.11.87 Patentblatt 87/47**

(45) Bekanntmachung des Hinweises auf die
Patenterteilung:
**04.12.91 Patentblatt 91/49**

(84) Benannte Vertragsstaaten:
**AT CH DE ES FR GB IT LI SE**

(56) Entgegenhaltungen:
**GB-A- 2 117 212
US-A- 2 531 732
US-A- 3 754 603
US-A- 4 328 660
US-E- 28 651**

(73) Patentinhaber: **G + E Jobst GmbH
Rabensteinerstrasse 20A
W-6497 Steinau-Ulmbach(DE)**

(72) Erfinder: **Jobst, Georg
Rabensteinerstrasse 20A
W-6497 Steinau-Ulmbach(DE)**
Erfinder: **Jobst, Egon
Rabensteinerstrasse 20A
W-6497 Steinau-Ulmbach(DE)**

(74) Vertreter: **Zapfe, Hans, Dipl.-Ing.
Am Eichwald 7, Postfach 20 01 51
W-6056 Heusenstamm 2 (Rembrücken)(DE)**

## Beschreibung

Die Erfindung betrifft ein Verfahren zum Bearbeiten von bepflanzbaren Böden nach dem Oberbegriff des Patentanspruchs 1

Die "allseitig flexiblen Elemente", bei denen es sich bevorzugt um Gliederketten endlicher Länge handelt, schlagen nach Art von Peitschen auf den Boden, wobei zerbrechbare Pflanzen und Pflanzenteile weitaus stärker zerkleinert werden als daß sie seitlich (in unzerkleinertem Zustand) weggeschleudert werden. Auf praktisch unüberwindlichen Hindernissen wie Baumstümpfen, dicken Baumwurzeln und größeren Gesteinsbrocken gleiten die flexiblen Elemente ab, ohne hierbei einem stärkeren Verschleiß ausgesetzt zu werden, als dieser durch die unvermeidbaren Reibungsverhältnisse bedingt ist.

Zum Stande der Technik (DE-A-3216951) gehört ein von einem gummibereiften Zugfahrzeug angetriebenes als "Mulchhacke" bezeichnetes Gerät, bei dem in einer Walze auf achsparallelen Zapfen plattenförmige Fliehgewichte gelagert sind, die jedenfalls beim Auftreten auf ein Hindernis (Baumwurzel, Stein) in die Walze einschwenken, so daß ein Bruch der Platte vermieden wird. Die Arbeitstiefe solcher Geräte ist jedoch gering. Die plattenförmigen Fliehgewichte wirken im wesentlichen in tangentialer Richtung auf den Boden ein, so daß lose auf dem Boden liegende Körper vermehrt seitlich weggeschleudert werden, statt zerkleinert und in den Boden eingearbeitet zu werden. Der Walze mit den Fliehgewichten ( = Schlegeln) ist daher eine tieferliegende Hackwelle mit starren Hackmessern nachgeordnet. Derartige Geräte sind für unebene Waldböden, insbesondere für solche, aus denen Baumstümpfe herausragen, nicht geeignet. Ein besonders schwerwiegender Nachteil besteht darin, daß bei einem schrägen Auftreffen der Fliehgewichte auf Hindernisse axiale Kraftkomponenten erzeugt werden, durch die die Fliehgewichte schwergängig, wenn nicht gar blockiert werden, so daß die Vorrichtung einer komplizierten Reparatur unterworfen werden muß.

Durch die US-A-2 531 732 ist ein Zerkleinerungsgerät für auf dem Ackerboden liegende Ernterückstände bekannt, bei dem die Fliehgewichte aus Ketten bestehen, an deren Enden Schlagwerkzeuge angeordnet sind. Auch dieses Gerät ist für den Einsatz auf Waldböden völlig ungeeignet.

Den beiden vorstehend beschriebenen Gerätetypen ist gemeinsam, daß ihre Drehachsen zu den Achsen des ziehenden und antreibenden Fahrzeugs parallel verlaufen und daß sie von diesem Fahrzeug in dessen Spur geschleppt werden. Die Bearbeitung größerer Flächen setzt also voraus, daß diese Fläche auf mehreren parallelen Fahrspuren einwandfrei befahrbar ist, und ist von dem

Fahrzeug in dessen Spur geschleppt werden. Die Bearbeitung größerer Flächen setzt also voraus, daß diese Fläche auf mehreren parallelen Fahrspuren einwandfrei befahrbar ist, und ist von dem Nachteil begleitet, daß der an sich aufzulockernde Boden durch das mehrfache Hin- und Herfahren in engem Abstand nebeneinander durch die Reifen des Zugfahrzeugs verfestigt wird.

Durch die US-A-4 328 660 sind eine Vorrichtung und ein Verfahren zum Befreien von Rebstöcken von unerwünschten Schößlingen bekannt, wobei die Rebstöcke jedoch nicht beschädigt werden dürfen. Infolgedessen sollen die flexiblen Elemente bevorzugt aus Gummistreifen bestehen, die bei ihrem Einsatz über den Boden streifen sollen. Die flexiblen Elemente sind dabei an einem Rotor befestigt, dessen Anstellwinkel gegenüber einer horizontalen Ebene durch hydraulische Mittel verstellbar ist. Soweit eine Verlagerung des Rotors quer zur Fahrtrichtung erfolgen soll, erfolgt die Einstellung von Hand mittels einer Gewindespindel, die jedoch vom Fahrersitz aus nicht erreichbar ist. Infolgedessen soll die seitliche Bewegung des Rotors durch Steuern des Fahrzeugs herbeigeführt werden. Da dieses Fahrzeug keinen drehbaren Aufbau besitzt, ist der Schwenkwinkel des Rotors gering und außerdem durch einen am Fahrzeug fest angebrachten Staubschutz begrenzt. Eine Schwenkbewegung des Rotors über die Fahrzeugbreite hinaus, ist weder vorgesehen noch möglich, und diese Schwenkbewegung ist insbesondere nicht vom Fahrersitz aus möglich.

Durch die US-Re. 28 651 ist eine Vorrichtung zum Entfernen vom Baumstümpfen bekannt, die zwei Messerköpfe besitzt, deren gemeinsame Drehachse in tangentialer Richtung zu einem Kreis verläuft, der die Schwenkachse der Messerköpfe als Mittelpunkt hat. Die starren Messerköpfe dienen nur zum Zerspanen der Baumstümpfe, nicht aber zum Umwälzen großer Erdmengen unter Beimischung der Späne im Sinne eines Mulchvorganges. Die gesamte Vorrichtung ist als Anhänger für eine Zugmaschine ausgebildet, und es ist offensichtlich nicht vorgesehen, die Bewegung der Messerköpfe während der Fahrt und von der Zugmaschine aus zu steuern.

In der Regel zeichnen sich Waldböden durch erhebliche Unregelmäßigkeiten unter und über der Erdoberfläche aus. Baumstümpfe und die davon ausgehenden Wurzeln stellen hierbei das Haupthindernis für den Einsatz von Maschinen dar. Sofern in dem betreffenden Waldstück Windbruch stattgefunden hat, haben die nach dem Entfernen der Baumstämme stehen gebliebenen Baumstümpfe eine mehr oder weniger große Höhe, weil die zum Aufräumen benötigte Säge nicht tiefer anzusetzen war. Sofern bei Windbruch der Wurzelteller schräg gestellt wurde, stellen die aus dem Waldboden herausragenden, teilweise recht starken Wurzeln ein weiteres Hindernis für den Einsatz von Maschinen dar. Das Absägen oder Zerkleinern solcher Wurzeln bzw. Stammreste führt zu weiteren Problemen, weil nämlich das anhaftende Erdreich zu einem schnellen Verschleiß der Sägen führt. Auch das nach dem Entfernen der Baumstämme auf dem Waldboden zurückbleibende Geäst und Laub beeinträchtigt den Einsatz von Maschinen.

Da die heutige Waldsituation das jahrelange Liegenlassen von Waldstücken ohne Baumbestand bis zum Vermodern der Baumstümpfe und bis zum Wiederbepflanzen verbietet, war die Aufarbeitung der Waldböden bisher in der Regel eine rein manuelle Arbeit, die von einer Vielzahl von Waldarbeitern pro Flächeneinheit bewerkstelligt werden mußte. Ein wesentlicher Bestandteil dieser Arbeit ist dabei das sogenannte "Mulchen" d.h. der bei Waldböden typische Belag an Pflanzen und Pflanzenteilen muß zur Regulierung der Bodenfeuchtigkeit zum Zwecke einer nachfolgenden Bepflanzung mit jungen Bäumen mit einer dünnen Schicht des darunterliegenden Erdbodens vermischt und in eine lockere Schüttung umgesetzt werden. Um diese Maßnahme von Hand durchführen zu können, müssen zunächst Zweige und Äste beseitigt werden, was in der Regel durch Zusammentragen an einer bestimmten Stelle und Verbrennen bewerkstelligt wurde. Auch diese Maßnahme ist zusätzlich äußerst arbeitsintensiv, und sie ist durch den Verbrennungsvorgang von einer erheblichen Belastung der Umwelt begleitet, ganz abgesehen davon, daß durch den Verbrennungsvorgang wertvolle Düngestoffe verloren gehen und die lebenswichtigen Mikroorganismen am Ort der Verbrennung abgetötet werden.

Der Erfindung liegt daher die Aufgabe zugrunde, ein Verfahren der eingangs beschriebenen Art anzugeben, durch das größere Flächenbereiche selbst erheblich unebener und inhomogener Waldböden maschinell und mit einem minimalen Einsatz menschlicher Arbeitskraft bearbeitet werden können.

Die Lösung der gestellten Aufgabe erfolgt bei dem eingangs beschriebenen Verfahren erfindungsgemäß durch die Merkmale im Kennzeichen des Patentanspruchs 1.

Auf diese Weise hat die bearbeitete Bodenoberfläche die Form einer von einem Scheibenwischer überstrichenen Fläche, ohne daß das für den Transport und den Antrieb der Welle benötigte Fahrzeug entsprechend stark seitlich versetzt werden müßte.

Durch die Verlagerung der Schwenkachse während des Bearbeitungsvorganges, entweder kontinuierlich oder schrittweise, werden mehrere Ausschnitte aus der vorstehend beschriebenen Kreisringfläche in Bewegungsrichtung des Fahrzeugs aneinandergereiht, wobei die zur Fahrtrichtung parallelen seitlichen Begrenzungslinien der gesamten bearbeiteten Fläche einen mehrfach größeren Abstand haben, als dies der Spurweite des Fahrzeugs entspricht. Dadurch gehört zu einer verhältnismäßig großen bearbeiteten Fläche nur eine einzige Fahrspur, die keine unvertretbare Verdichtung der bearbeiteten Bodenfläche zur Folge hat.

Durch das erfindungsgemäße Verfahren werden größere Pflanzen und Pflanzenteile, darunter auch Gestrüpp, zerkleinert und zusammen mit dem ohnehin verhältnismäßig lockeren Belag des Erdbodens und mit einer gewissen Oberflächenschicht dieses Erdbodens verwirbelt und als weitgehend homogenisiertes Gemisch wieder auf der neuen Oberfläche des erhalten gebliebenen Teils des Erdreiches in lockerer Form als "Mulch" abgelagert. Bei der Neubepflanzung des Bodens braucht jetzt nur noch ein Loch ausgehoben zu werden, das um ein bestimmtes Maß tiefer ist als die Dicke der Mulch-Schicht. Nach dem Einsetzen des Baumes und dem Wiederauffüllen des Lochs wird durch die Mulch-Schicht die Bodenfeuchtigkeit reguliert und insbesondere aufrechterhalten und wertvoller Humus bzw. wertvolle Düngestoffe bereitgestellt.

Auch ein Auftreffen der flexiblen Elemente auf Baumstümpfe etc. ist nicht weiter gravierend. Es ist sogar möglich, bei schrägstehenden Wurzeltellern mittels der flexiblen Elemente zwischen den Wurzeln festsitzendes Erdreich herauszuschleudern und den Wurzelteller auf diese Weise für den Einsatz einer Säge vorzubereiten. Die Drehzahl der Welle wird dabei unter Berücksichtigung der weiter unten noch näher erläuterten Dimensionierung der Welle und der flexiblen Elemente zwischen etwa 500 und 1000 $min^{-1}$ gewählt. Immerhin hat sich gezeigt, daß bereits hierbei Antriebsleistungen zwischen etwa 150 und 250 kW benötigt werden.

Die Erfindung betrifft auch eine Vorrichtung nach dem Oberbegriff des Patentanspruchs 3.

Zur Lösung im wesentlichen der gleichen Aufgabe ist diese Vorrichtung erfindungsgemäß gekennzeichnet durch die Merkmale im Kennzeichen des Patentanspruchs 3.

Es ist dabei weiterhin von Vorteil, wenn der Ausleger in einer zur Schwenkachse radialen, senkrechten Ebene schwenkbar ist und wenn an dessen dem Aufbau abgekehrten Ende sich ein Lager für die Welle befindet.

Sofern der Ausleger in Fahrtrichtung zeigt, verläuft die Welle gleichfalls in Fahrtrichtung, und dies steht in deutlichem Gegensatz zu den eingangs beschriebenen bekannten Vorrichtungen, bei denen die Drehachse der Mulchhacke bzw. der Walze senkrecht zur Fahrtrichtung verläuft. Durch Hin- und Herschwenken des Auslegers mit der Welle läßt sich die weiter oben beschriebene Kreisringfläche (oder ein sektorförmiger Ausschnitt hieraus) bearbeiten, und durch Aneinanderreihung solcher Sektoren in Fahrtrichtung läßt sich eine Fläche bearbeiten, die bei entsprechender Länge des Auslegers mehrfach breiter ist als die Fahrspur des Kettenfahrzeugs.

Es ist dabei weiterhin zweckmäßig, wenn der Ausleger in einer senkrechten Ebene zum Zwecke der Einstellung des Abstandes der Welle vom Boden schwenkbar ist. Es ist dabei weiterhin zweckmäßig - aber nicht unbedingt erforderlich - wenn das Lager für die Welle relativ zum Ausleger im Winkel verstellbar ist. Je länger der Ausleger ist, um so stärker kann der Abstand der Welle vom Boden verändert werden, ohne daß die Welle in eine ungünstige Neigung zur Bodenoberfläche gelangt.

Durch Absenken des Auslegers und weiteres Annähern der Trommelachse an die Bodenoberfläche hat man es in der Hand, den dem Mulch beigemischten Erdanteil zu vergrößern.

Es ist dabei besonders vorteilhaft, wenn die Welle durch eine zylindrische Trommel gebildet ist, auf deren Oberfläche die allseitig flexiblen Elemente an in Umfangsrichtung beweglichen Gelenken befestigt sind.

Auf diese Weise können sich die flexiblen Elemente beim Auftreffen auf ein Hindernis nahezu an die Trommel anschmiegen, ohne Gefahr zu laufen, abgerissen oder verbogen zu werden.

Diese Gelenke besitzen bevorzugt Achsen, die parallel zur Dreh- bzw. Trommelachse verlaufen und sich zwischen an der Trommeloberfläche befestigten Lagerböcken erstrecken und Gelenkhülsen tragen, an denen ein Befestigungselement für die Anbringung eines flexiblen Elements angeordnet ist.

Auf diese Weise wird an den am höchsten belasteten Stellen eine ausgesprochene Lagerkonstruktion vorgesehen, und es hat sich gezeigt, daß dadurch die Lebensdauer der Vorrichtung bis zu einer Reparatur des betreffenden flexiblen Elements um etwa das 5- bis 10-fache verlängert werden kann, insbesondere dann, wenn die Gelenke mit einer Schmiermittelfüllung versehen sind.

Es hat sich dabei weiterhin als besonders vorteilhaft erwiesen, wenn der Abstand der Gelenkachsen in Umfangsrichtung der Trommel zwischen dem 0,5-fachen und dem 1,5-fachen der Länge der flexiblen Elemente beträgt. Bei der 1,0-fachen Länge könnte das Ende des flexiblen Elements, das kreisbogenförmig auf der Trommel aufliegt, gerade eben die nachfolgende Gelenkachse berühren. Eine gewisse Überlappung der Länge hat sich jedoch für den Peitscheneffekt als äußerst nützlich erwiesen, ohne daß es zu einer unerwünschten Verschlingung der flexiblen Elemente gekommen wäre.

Es hat sich in der Praxis als besonders vorteilhaft erwiesen, wenn das Gewicht der flexiblen Elemente pro laufendem Meter zwischen 5 kg und 15 kg beträgt, vorzugsweise zwischen 8 und 12 kg.

Bei einem praktischen Ausführungsbeispiel waren auf einer Trommel mit einem Durchmesser von 60 cm und einer Länge von 1,2 m in sechs radialen Ebenen zwölf Gliederketten befestigt, und zwar jeweils paarweise in diametraler Anordnung und um jeweils 90 Winkelgrade in Umfangsrichtung versetzt. Die Länge einer Gliederkette betrug etwa 1 m bei einem Gewicht von 9,5 kg pro laufenden Meter. Bei einer Antriebsleistung von 185 kW wurde eine mittlere Drehzahl von 700 min$^{-1}$ erreicht, die zu einer tadellosen Bearbeitung eines besonders schwierigen, weil welligen Waldbodens führte.

Es ist dabei weiterhin von Vorteil, wenn das Fahrzeug ein Kettenfahrzeug ist, weil auf diese Weise bei niedriger Flächenpressung ein hohes Fahrzeuggewicht zum Einsatz kommen kann, das die erforderliche sichere Führung der Welle mit den flexiblen Elementen gewährleistet.

Weitere vorteilhafte Ausgestaltungen des Erfindungsgegenstandes ergeben sich aus den übrigen Unteransprüchen.

Ein Ausführungsbeispiel des Erfindungsgegenstandes wird nachfolgend anhand der Figuren 1 bis 7 näher erläutert.

Es zeigen:

Figur 1     eine Ansicht der vollständigen Vorrichtung in Fahrtstellung schräg von vorn,

Figur 2     das Ende des Auslegers mit dem Lager für die als Trommel ausgebildete Welle und ein hinteres Teilstück dieser Trommel aus einer Blickrichtung von schräg hinten,

Figur 3     eine vollständige Ansicht der Trommel im Stillstand,

Figur 4     einen teilweisen Axialschnitt durch die Trommel im Bereich ihrer Verbindungsstelle mit der Antriebswelle,

Figur 5     einen Ausschnitt aus Figur 3 in vergrößertem Maßstab, nämlich ein Gelenk zwischen Trommel und einem der flexiblen Elemente,

Figur 6     einen Querschnitt durch die Kardanwelle und

Figur 7     eine Draufsicht auf die vordere Stirnseite der Trommel.

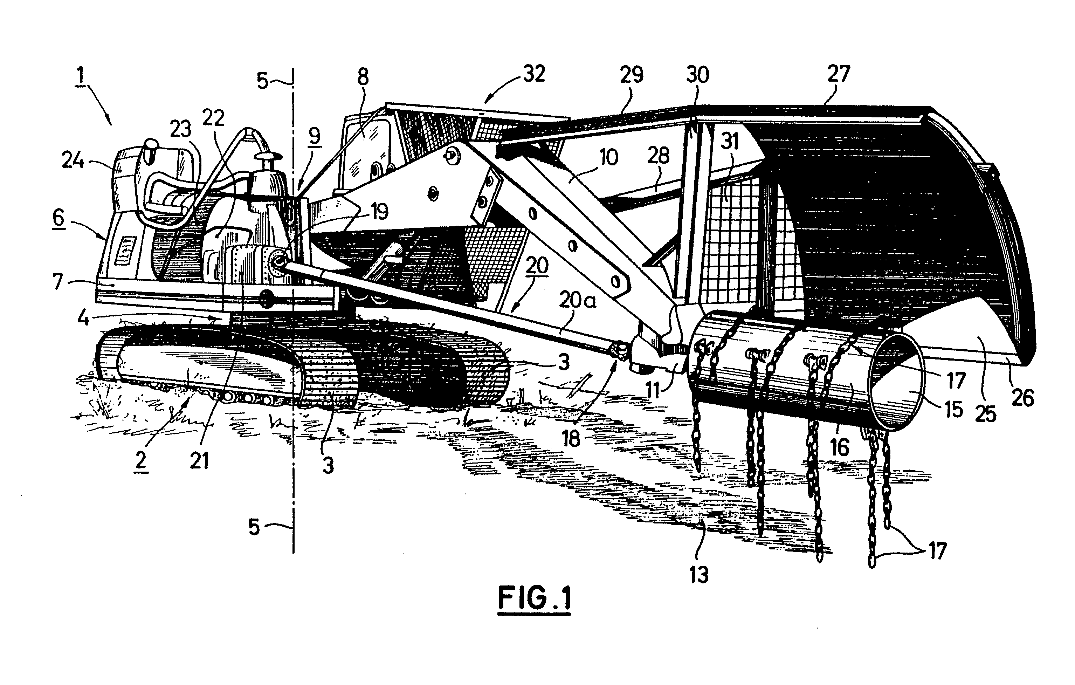

In Figur 1 ist ein Kettenfahrzeug 1 mit einem Kettenfahrwerk 2 dargestellt, zu dem zwei hydraulisch angetriebene Raupenketten 3 gehören. Das Kettenfahrwerk 2 besitzt einen Drehkranz 4, der eine vertikale Schwenkachse 5 für einen drehbaren Aufbau 6 umgibt, zu dem eine Plattform 7 gehört.

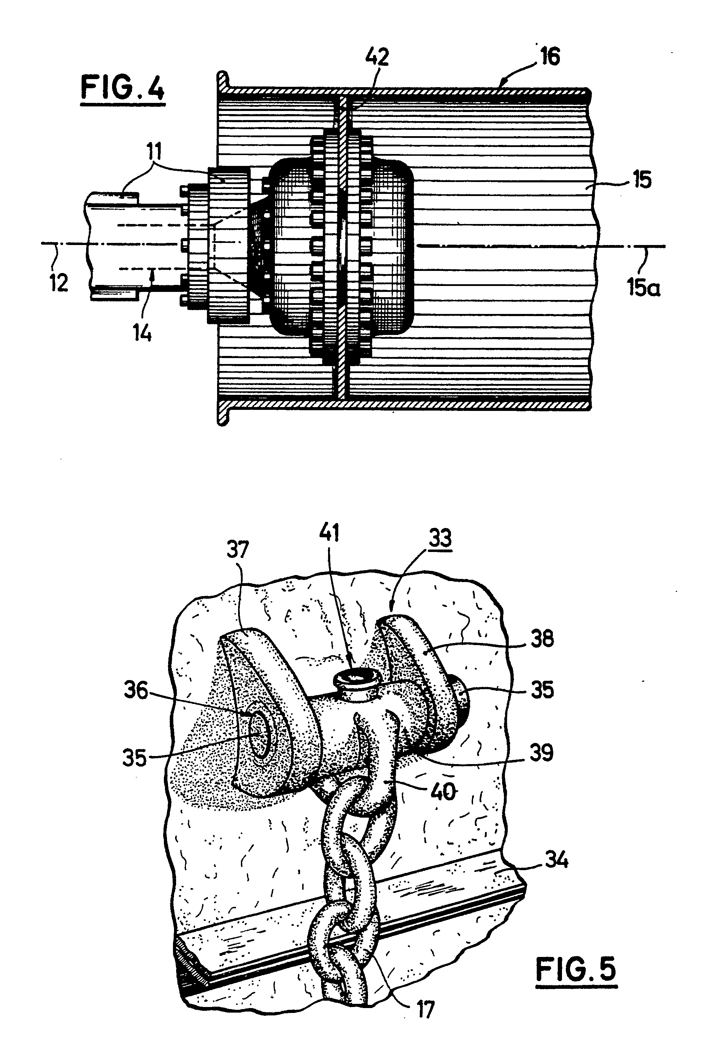

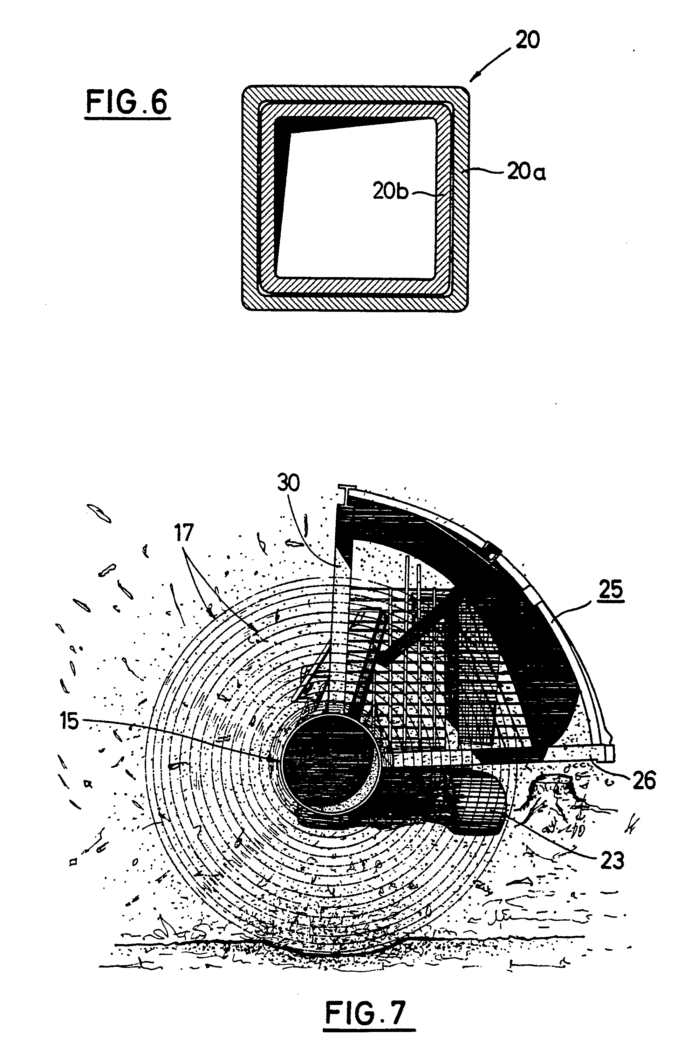

Die Plattform 7 trägt eine Fahrerkabine 8 mit den erforderlichen Steuereinrichtungen und eine horizontale Gelenkachse 9, an der ein hydraulisch verstellbarer Ausleger 10 befestigt ist, dessen Symmetrieebene in einer senkrechten Ebene schwenkbar ist, in der auch die Schwenkachse 5 liegt. Der Ausleger 10 hat die Form eines weit geöffneten "V", dessen Scheitel nach oben weist. Am jenseitigen Ende besitzt der Ausleger 10 ein Lager 11, dessen Achse 12 (Figur 4) in Arbeitsstellung der Vorrichtung horizontal bzw. parallel zum Boden 13 verläuft, auf dem die Vorrichtung aufgestellt ist. Durch das Lager 11 ist eine an beiden Enden gelagerte Welle 14 hindurchgeführt, die an ihrem der Schwenkachse 5 abgekehrten Ende als Trommel 15 ausgebildet ist, die auf ihrer äußeren Oberfläche 16 insgesamt zwölf nachstehend noch näher beschriebene allseitig flexible Elemente 16 trägt, die in der in Figur 1 gezeigten Ruhestellung entweder schlaff herunterhängen oder auf der Trommeloberfläche 16 aufliegen. Von der Welle 14 führt eine an beiden Enden mit Kardangelenken 18 und 19 versehene Kardanwelle 20 über ein schaltbares Getriebe 21 und eine Kupplung 22 zu einem Antriebsmotor 23, der zusammen mit einem Kraftstofftank 24 auf der Plattform 7 befestigt ist. Die Kardanwelle 20 besteht gemäß Figur 6 aus zwei teleskopartig ineinander verschiebbaren Rohren, und zwar aus einem Außenrohr 20a und einem Innenrohr 20b. Hierdurch kann eine erhebliche Längenänderung bei der Auf-und Abwärtsbewegung des Auslegers 10 überbrückt werden. Die Trommel 15 ist im wesentlichen konzentrisch und auf ihrer gesamten Länge von einer Schutzeinrichtung 25 umgeben, die etwa einen Quadranten des Trommelumfangs überdeckt, aus einem starkwandigen, zylindrisch gebogenen Blech besteht, und von der Trommel 15 einen solchen Abstand hat, daß sie von den durch Fliehkraft gespannten flexiblen Elementen 17 nicht erreicht werden kann. Die Schutzeinrichtung 25 ist an Rahmenstreben 26, 27, 28, 29 und 30 aufgehängt und innerhalb des genannten Quadranten durch ein Drahtgitter 31 in Richtung auf die Fahrerkabine 8 verschlossen. Die Vorderseite der Fahrerkabine 8 ist zusätzlich noch durch einen Drahtkorb 32 gegen herumfliegende Teile geschützt. Die Position der Schutzeinrichtung 25 ist (von vorn gesehen) auf eine Linksdrehung der Trommel 15 ausgerichtet. Bei einer solchen Linksdrehung wird der Ausleger 10 beim Bearbeitungsvorgang in Richtung auf den Betrachter in Figur 1 zugeschwenkt. Es kann gegebenenfalls zweckmäßig sein, die Drehrichtung der Trommel 15 in eine Rechtsdrehung umzukehren, und die Schutzeinrichtung 25 im gegenüberliegenden oberen Quadranten anzuordnen. Alsdann sind die Sichtverhältnisse für den Fahrer verbessert, weil nämlich der Bearbeitungsvorgang während einer Schwenkbewegung des Auslegers 10 durchgeführt wird, die vom Betrachter der Figur 1 weg gerichtet ist.

Es ist aus Figur 1 noch erkennbar, daß durch die gewählte Anordnung die Welle 14 und damit die in ihrer Verlängerung liegende Achse der Trommel 15 in radialer Richtung zur vertikalen Schwenkachse 5 verlaufen und daß diese Schwenkachse 5 außerhalb der Länge der Trommel 15 liegt, und zwar in einem Abstand, der ein Mehrfaches der Länge der Trommel 15 beträgt, so daß ein entsprechend großer Sektor eines Kreisrings durch Schwenken des Aufbaus 6 bearbeitet werden kann, und Auf- und Abwärtsbewegungen der Trommel 15 können keinen nennenswert ungünstigen Einfluß auf die Parallelität derrTrommel 15 zum Boden 13 haben.

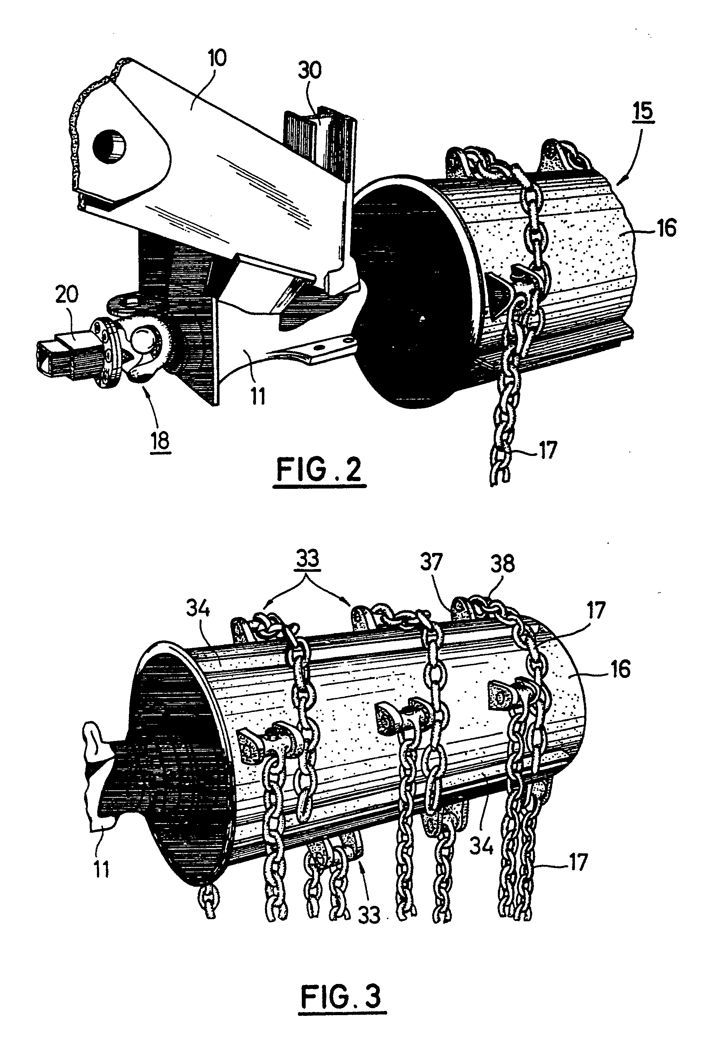

Aus Figur 2 sind deutlicher die Einzelheiten der Befestigung des Lagers 11 am freien unteren Ende des Auslegers 10 zu erkennen. Figur 3 zeigt, daß in insgesamt sechs radialen Ebenen insgesamt zwölf flexible Elemente 17 angeordnet sind, wobei die flexiblen Elemente 17 innerhalb einer radialen Ebene jeweils paarweise an diametral gegenüberliegenden Stellen gelenkig befestigt sind. Weiterhin ist zu erkennen, daß die Befestigungsstellen in jeder radialen Ebene zu denen der unmittelbar benachbarten radialen Ebene um 90 Grad versetzt sind, so daß sich die einzelnen flexiblen Elemente, die als Gliederketten ausgebildet sind, trotz ihrer Überlappung mit benachbarten flexiblen Elementen gegenseitig möglichst wenig behindern. Es ist weiterhin zu erkennen, daß die flexiblen Elemente an in Umfangsrichtung beweglichen Gelenken 33 befestigt sind, deren Einzelheiten anhand von Figur 5 näher erläutert werden. Es ist noch zu erkennen, daß die Trommel 15 auf ihrem Umfang durch Längsrippen 34 versteift ist, die jeweils in der Mitte zwischen den um 90 Grad auf dem Umfang versetzten Gelenken 33 angeordnet sind. Durch diese Maßnahme wird wirksam verhindert, daß die Trommel 15 durch das gelegentlich vorkommende Aufschlagen der flexiblen Elemente 17 örtlich verformt wird.

In Figur 5 ist eines der Gelenke 33 in Figur 3 in vergrößertem Maßstab dargestellt. Jedes dieser Gelenke 33 besitzt eine Achse 35, die zur Trommelachse 15a (Figur 4) parallel verläuft. Diese Achse 35 ist an beiden Enden in je einer Bohrung 36 eines auf der Trommeloberfläche 16 befestigten Lagerbocks 37 und 38 gelagert und von je einer Gelenkhülse 39 umgeben, an denen ein Befestigungselement 40 für die Anbringung eines flexiblen Elements 17 angeordnet ist. Im einfachsten Fall kann das Befestigungselement 40 aus einem aufgeschnittenen Kettenglied bestehen, das mittig und in radialer Richtung mit der Gelenkhülse 39 verschweißt ist. Die Gelenke 33 sind mit einer Schmiermittelfüllung versehen, die von Zeit zu Zeit über einen Schmiernippel ergänzt wird, der im Innern eines Schutzkragens 41 angeordnet ist.

Figur 4 ist noch zu entnehmen, auf welche Weise die Trommel 15 am Ende der Welle 14 befestigt ist. Die Übertragung des Drehmoments erfolgt über eine mit der Welle 14 durch Verschraubung verbundene radiale Kreisscheibe 42, die mit der Trommel 15 untrennbar, z.B. durch Verschweissen, verbunden ist. Figur 7 zeigt die Kreisbahnen, die von den einzelnen Kettengliedern beim ungehinderten Umlauf um ihre gemeinsame Drehachse durchlaufen werden. Beim Eindringen in den Boden bzw. die Bodenauflage bzw. den Mulch stellen sich natürlich Abweichungen von diesen Kreisbahnen ein. Auch die räumliche Lage der Schutzeinrichtung 25 zur Trommel 15 ist etwa maßstäblich dargestellt. Die Schutzeinrichtung dient auch als Leiteinrichtung für Mulchteile und Erde und kann ggf. auf den gegenüberliegenden oberen Quadranten ausgedehnt werden.

Die aus der Welle 14 bzw. Trommel 15 und den flexiblen Elementen 17 bestehende Einrichtung kann auch als "Mulchkopf" bezeichnet werden.

Der Antrieb des Mulchkopfes kann auch über Hydraulikleitungen oder elektrische Kabel erfolgen, wenn die Welle 14 mit einem Hydraulik- bzw. einem Elektromotor verbunden ist.

**Patentansprüche**

1. Verfahren zum Bearbeiten von bepflanzbaren Böden (13), insbesondere von Waldböden, durch Zerkleinern und Einarbeiten von auf diesen Böden liegenden Pflanzen und Pflanzenteilen wie Blättern, Nadeln, Zweigen und Ästen, wobei man über der Bodenoberfläche eine Vielzahl von durch Fliehkraft gespannten, an einer im wesentlichen horizontalen, an einem Fahrzeug (1) angebrachten Welle (14) befestigten, in Umfangs- und Längsrichtung der Drehachse der Welle (14) verteilt angeordneten, allseitig flexiblen Elementen (17) mittels dieser Welle in Umlauf versetzt, wobei der Umlaufradius der Enden dieser flexiblen Elemente größer ist als der gewählte Abstand der Drehachse der Welle von der Bodenoberfläche, **dadurch gekennzeichnet,** daß man die horizontale Drehachse der Welle (14) zusätzlich einer hin- und hergehenden über die Spurweite des Fahrzeugs (1) hinausgehenden Schwenkbewegung um eine vertikale Schwenkachse (5) aussetzt, wobei die Drehachse der Welle im wesentlichen radial zur Schwenkachse (5) gehalten wird, und daß die Schwenkachse (5) während des Bearbeitungsvorganges durch Verfahren des Fahrzeugs (1) verlagert wird.

2. Verfahren nach Anspruch 1, **dadurch gekennzeichnet,** daß die Drehzahl der Welle (14) zwischen 500 und 1000 min$^{-1}$ gewählt wird.

3. Vorrichtung zum Bearbeiten von bepflanzbaren Böden (13), insbesondere von Waldböden, durch Zerkleinern und Einarbeiten von auf diesen Böden liegenden Pflanzen und Pflanzenteilen wie Blättern, Nadeln, Zweigen und Ästen nach Anspruch 1, bestehend aus einem über dem Boden (13) verfahrbaren Fahrzeug (1), an dem sich eine durch einen Motor (23) antreibbare, zur Bodenoberfläche im wesentlichen parallele Welle (14) befindet, die eine Trommel (15) trägt, an der mehrere in Längs- und Umfangsrichtung der Drehachse der Trommel (15) verteilte, allseitig flexible Elemente (17) in der Weise angebracht sind, daß sich ihre Längsachsen bei Betriebsdrehzahl, in ansonsten aber unbelastetem Zustand, durch Fliehkraft in im wesentlichen radialen Richtungen einstellen, wobei der Abstand der Trommel (15) zur Bodenoberfläche einstellbar ist, **dadurch gekennzeichnet,** daß das Fahrzeug (1) einen durch einen Antrieb während des Verfahrens um eine senkrechte Schwenkachse (5) relativ zu einem Fahrwerk (2) drehbaren Aufbau (6) mit einer Plattform (7), einer Fahrerkabine (8) mit den erforderlichen Steuereinrichtungen und mit einem Ausleger (10) besitzt, an dem die Welle (14) mit der Trommel (15) im wesentlichen radial zur Schwenkachse (5) gelagert ist, und daß der Schwenkbereich des Aufbaus und die Länge des Auslegers so dimensioniert sind, daß die Trommel (15) über eine Bearbeitungsfläche bewegbar ist, die breiter ist als die Spurweite des Fahrzeugs (1).

4. Vorrichtung nach Anspruch 3, **dadurch gekennzeichnet,** daß der Ausleger (10) in einer zur Schwenkachse (5) radialen, senkrechten Ebene schwenkbar ist, und daß an dessen dem Aufbau (6) abgekehrten Ende sich ein Lager (11) für die Welle (14) befindet.

5. Vorrichtung nach Anspruch 3, **dadurch gekennzeichnet,** daß der Ausleger (10) in der senkrechten Ebene zum Zwecke der Einstellung des Abstandes der Trommel (15) vom Boden (13) schwenkbar ist.

6. Vorrichtung nach Anspruch 3, **dadurch gekennzeichnet,** daß an der Oberfläche (16) der zylindrischen Trommel (15) die allseitig flexiblen Elemente (17) paarweise an diametral gegenüberliegenden Stellen in jeweils einer von mehreren radialen Ebenen gelenkig befestigt sind und daß die Befestigungsstellen in jeder radialen Ebene zu denen der unmittelbar benachbarten radialen Ebene um 90 Grad versetzt sind.

7. Vorrichtung nach Anspruch 6, **dadurch gekennzeichnet,** daß in sechs radialen Ebenen zwölf flexible Elemente (17) angeordnet sind.

8. Vorrichtung nach Anspruch 3, **dadurch gekennzeichnet,** daß die flexiblen Elemente Stahlseile sind.

9. Vorrichtung nach Anspruch 4, **dadurch gekennzeichnet,** daß die allseitig flexiblen Elemente (17) auf der Oberfläche (16) der Trommel (15) an in Umfangsrichtung beweglichen Gelenken (33) befestigt sind, und daß die Achsen (35) der Gelenke (33) parallel zur Dreh- bzw. Trommelachse (15a) und zwischen an der Trommeloberfläche (16) befestigten Lagerböcken (37, 38) verlaufen und Gelenkhülsen (39) tragen, an denen je ein Befestigungselement (40) für die Anbringung eines flexiblen Elements (17) angeordnet ist.

10. Vorrichtung nach Anspruch 9, **dadurch gekennzeichnet,** daß die Gelenke (33) mit einer Schmiermittelfüllung versehen sind.

11. Vorrichtung nach Anspruch 6, **dadurch gekennzeichnet,** daß die Trommel (15) auf ihrem Umfang durch Längsrippen (34) versteift ist.

12. Vorrichtung nach Anspruch 3, **dadurch gekennzeichnet,** daß der Abstand der Gelenkachsen (35) in Umfangsrichtung der Trommel zwischen dem 0,4-Fachen und dem 1,5-Fachen der Länge der flexiblen Elemente (17) beträgt.

13. Vorrichtung nach Anspruch 3, **dadurch gekennzeichnet,** daß die Länge der flexiblen Elemente (17) zwischen dem 0,8-Fachen und dem 2,5-Fachen des Durchmessers der Trommel (15) beträgt.

14. Vorrichtung nach Anspruch 3, **dadurch gekennzeichnet,** daß das Gewicht der flexiblen Elemente (17) pro laufendem Meter zwischen 5 kg und 15 kg beträgt.

15. Vorrichtung nach Anspruch 3, **dadurch gekennzeichnet,** daß mindestens an den Enden der flexiblen Elemente (17) zusätzliche Fliehgewichte angebracht sind.

16. Vorrichtung nach Anspruch 3, **dadurch gekennzeichnet,** daß das Fahrzeug (1) ein Kettenfahrzeug ist.

17. Vorrichtung nach Anspruch 3, **dadurch gekennzeichnet,** daß sich der Antriebsmotor (23) für die Welle (14) an dem schwenkbaren Aufbau (6) befindet und über eine flexible Kraftübertragungseinrichtung mit der Welle (14) verbunden ist.

18. Vorrichtung nach Anspruch 17, **dadurch gekennzeichnet,** daß die flexible Kraftübertragungseinrichtung eine Kardanwelle (20) ist und daß die Kardanwelle (20) zwei Kardangelenke (18, 19) aufweist und zwischen diesen aus zwei teleskopartig ineinander verschiebbaren Rohren (20a, 20b) mit Mehrkantprofil besteht.

**Claims**

1. Method for working cultivatable soil (13), particularly forest soil, by reducing and working-in thereon disposed plants and plant portions, such as leaves, needles, twigs and branches, wherein a plurality of all-sidedly flexible elements (17), which are tensioned by centrifugal force and mounted to a vehicle-mounted (1) substantially horizontal shaft (14) and spaced in the circumferential and longitudinal direction of the axis of rotation of the shaft (14), are rotated over the soil surface by means of this shaft, whereby the rotary radius of the ends of these flexible elements is larger than the selected distance of the rotary axis of the shaft from the soil surface, **characterised in that** the horizontal rotary axis of the shaft (14) is additionally subjected to a to-and-fro moving pivot movement extending beyond the track width of the vehicle (1) around a vertical pivot axis (5), whereby the rotary axis of the shaft is held substantially radially to the pivot axis (5), and in that the pivot axis (5) is transposed during the working process by movement of the vehicle (1).

2. Method according to claim 1, **characterised in that** the revolutions of the shaft (14) are selected between 4500 and 1000 $min^{-1}$.

3. Device for working cultivatable soil (13), particular forest soil, by reducing and working-in thereon disposed plants and plant portions, such as leaves, needles, twigs and branches, according to claim 1, comprising a vehicle (1), which is movable over the soil (13), with a shaft (14), which is driven by a motor (23) and substantially parallel with the soil surface and which carries a drum (15) to which are attached several all-sidedly flexible elements (17) spaced in the longitudinal and circumferential direction of the rotary axis of the drum (15) in such a manner that their longitudinal axes, at operating revolutions whilst otherwise not loaded, are set by way of centrifugal force in substantially radial directions, in which respect the distance of the drum (15) to the soil surface is adjustable, **characterised in that** the vehicle has a superstructure (6), which whilst mobile is rotatable by means of a drive around a vertical pivot axis (5) relative to the undercarriage (2), having a platform (7), a driver cabin (8) with the required control devices and with a boom (10) to which the shaft (14) with the drum (15) is mounted substantially radially to the pivot axis (5), and in that the pivot range of the superstructure and the length of the boom are dimensioned such that the drum (15) is movable over a working surface which is broader than the track width of the vehicle.

4.  Device according to claim 3, **characterised in that** the boom (10) is pivotable in a vertical plane which is radial relative to the pivot axis (5), and in that at its ends facing away from the superstructure (6) is a mount (11) for the shaft (14).

5.  Device according to claim 3, **characterised in that** the boom (10) is pivotable in the vertical plane for the purpose of setting the distance of the drum (15) to the soil (13).

6.  Device according to claim 3, **characterised in that** the all-sidedly flexible elements (17) are hingedly mounted in pairs on diametrally opposite places in one of several respective radial planes at the surface (16) of the cylindrical drum (15), and in that the mounting locations are in each plane transposed by 90 degrees relativeto those of the immediately adjacent radial plane.

7.  Device according to claim 6, **characterised in that** twelve flexible elements (17) are arranged in six radial planes.

8.  Device according to claim 3, **characterised in that** the flexible elements are steel ropes.

9.  Device according to claim 4, **characterised in that** the all-sidedly flexible elements (17) are mounted on the surface (16) of the drum (15) to hinges (33), which are movable in the circumferential direction, and in that the axes (35) of the hinges (33) extend parallel with the rotary or drum axis (15a) respectively and between mounting bocks (37, 38), which are attached between the drum surface (16), and in that the carry hinged sleeves (39) with each one fixing element (40) for attaching a flexible element (17).

10. Device according to claim 9, **characterised in**

that the hinges (33) are provided with a lubricating filling.

11. Device according to claim 6, **characterised in that** the drum (15) is stiffened in its circumference by longitudinal ribs (34).

12. Device according to claim 3, **characterised in that** the distance of the hinged axes (35) in the circumferential direction of the drum is between 0.4 times and 1.5 times the length of the flexible elements (17).

13. Device according to claim 3, **characterised in that** the length of the flexible elements (17) is between 0.8 times and 2.5 times the diameter of the drum (15).

14. Device according to claim 3, **characterised in that** the weight of the flexible elements (17) is between 5 kgs and 15 kgs per linear metre.

15. Device according to claim 3, **characterised in that** additional fly weight are attached at least to the ends of the flexible elements (17).

16. Device according to claim 3, **characterised in that** the vehicle (1) is a track-laying vehicle.

17. Device according to claim 3, **characterised in that** the drive motor (23) of the shaft (14) is located at the pivotable superstructure and connected to the shaft (14) by means of a flexible power transmission means.

18. Device according to claim 17, **characterised in that** the flexible power transmission means is a transmission shaft (20), and in that the transmission shaft (20) has two transmission joints (18, 19), having thereinbetween two telescope-like retractable displaceable pipes (20a, 20b) with multi-edge profile.

**Revendications**

1.  Procédé pour travailler des sols cultivables (13), notamment des sols de forêt, par broyage et insertion dans le sol des plantes et parties de plantes jonchant ce sol, telles que des feuilles, des aiguilles, des brindilles et des branches, un grand nombre d'éléments flexibles en tous sens (17), tendus par la force centrifuge, fixés sur un arbre (14) sensiblement horizontal monté sur un véhicule (1), et répartis en direction périphérique et longitudinale de l'axe de rotation de l'arbre (14), étant mis en mouvement de révolution par cet arbre, audessus de la surface du sol, le rayon de révolution des extrémités de ces éléments flexibles étant supérieur à la distance choisie entre l'axe de rotation de l'arbre et la surface du sol, caractérisé en ce que l'on soumet en plus l'axe de rotation horizontal de l'arbre (14), à un mouvement de pivotement alternatif s'étendant au-delà de la largeur de voie du véhicule (1), autour d'un axe de pivotement vertical (5), l'axe de rotation de l'arbre étant maintenu sensiblement radial par rapport à l'axe de pivotement (5), et en ce que l'axe de pivotement (5) est déplacé au cours de l'opération de travail, par déplacement du véhicule (1).

2. Procédé selon la revendication 1, caractérisé en ce que la vitesse de rotation de l'arbre (14) est choisie entre 500 et 1000 t/min.

3. Dispositif pour travailler des sols cultivables (13), notamment des sols de forêt, par broyage et insertion dans le sol des plantes et parties de plantes jonchant ce sol, telles que des feuilles, des aiguilles, des brindilles et des branches, selon la revendication 1, le dispositif étant constitué par un véhicule (1) susceptible de se déplacer sur le sol (13), et sur lequel se trouve un arbre (14) sensiblement parallèle à la surface du sol, pouvant être entraîné par un moteur (23) et portant un tambour (15) sur lequel sont montés plusieurs éléments flexibles en tous sens (17) répartis en direction périphérique et longitudinale de l'axe de rotation du tambour (15), de manière à ce que leurs axes longitudinaux se mettent dans des directions sensiblement radiales, en raison de la force centrifuge, lors de l'établissement de la vitesse de rotation de fonctionnement et lorsqu'ils ne sont pas sollicités par ailleurs, la distance du tambour (15) à la surface du sol étant réglable, caractérisé en ce que le véhicule (1) comporte un châssis cabine (6) pouvant tourner au cours de l'exécution du procédé, au moyen d'un dispositif d'entraînement, par rapport à un châssis de roulement (2), autour d'un axe de pivotement vertical (5), et comportant une plate-forme (7), une cabine de conduite (8) comprenant tous les dispositifs de commande nécessaires, ainsi qu'un bras (10) sur lequel est monté, de manière sensiblement radiale à l'axe de pivotement (5), l'arbre (14) avec le tambour (15), et en ce que la plage de pivotement du châsis cabine et la longueur du bras sont dimensionnées de manière à ce que le tambour (15) puisse être déplacé sur une surface de travail qui est plus large que la largeur de voie du véhicule (1).

4. Dispositif selon la revendication 3, caractérisé en ce que le bras (10) peut basculer dans un plan vertical radial à l'axe de pivotement (5), et en ce qu'à son extrémité la plus éloignée du châssis cabine (6), se trouve un palier (11) pour l'arbre (14).

5. Dispositif selon la revendication 3, caractérisé en ce que le bras (10) peut basculer dans le plan vertical en vue du réglage de la distance du tambour (15) au sol (13).

6. Dispositif selon la revendication 3, caractérisé en ce que les éléments flexibles en tous sens (17 sont fixés de manière articulée et par paires en des points diamétralement opposés, sur la surface extérieure (16) du tambour cylindrique (15), chaque paire étant située dans l'un de plusieurs plans radiaux, et en ce que les points de fixation dans chaque plan radial sont décalés de 90 degrés par rapport à ceux du plan radial directement voisin.

7. Dispositif selon la revendication 6, caractérisé en ce que douze éléments flexibles (17) sont disposés dans six plans radiaux.

8. Dispositif selon la revendication 3, caractérisé en ce que les éléments flexibles sont des câbles d'acier.

9. Dispositif selon la revendication 4, caractérisé en ce que les éléments flexibles en tous sens (17) sont fixés sur la surface extérieure (16) du tambour (15), à des articulations (33) mobiles dans la direction périphérique, et en ce que les axes (35) des articulations (33) s'étendent parallèlement à l'axe de rotation ou axe de tambour (15a), entre des supports de paliers (37, 38) fixés à la surface extérieure (16) du tambour, et portent des douilles d'articulation (39) sur chacune desquelles est disposé un élément de fixation (40) pour le montage d'un élément flexible (17).

10. Dispositif selon la revendication 9, caractérisé en ce que les articulations (33) sont munies d'un remplissage de lubrifiant.

11. Dispositif selon la revendication 6, caractérisé en ce que le tambour (15) est renforcé sur sa périphérie, par des nervures longitudinales (34).

12. Dispositif selon la revendication 3, caractérisé en ce que l'intervalle dans la direction périphérique du tambour, entre les axes d'articulation (35), est compris entre 0,4 fois et 1,5 fois la longueur des éléments flexibles (17).

13. Dispositif selon la revendication 3, caractérisé en ce que la longueur des éléments flexibles (17) a une valeur comprise entre 0,8 fois et 2,5 fois le diamètre du tambour (15).

14. Dispositif selon la revendication 3, caractérisé en ce que le poids par mètre linéaire des éléments flexibles (17) est compris entre 5 kg et 15 kg.

15. Dispositif selon la revendication 3, caractérisé en ce que des masselottes centrifuges supplémentaires sont rajoutées au moins aux extrémités des éléments flexibles (17).

16. Dispositif selon la revendication 3, caractérisé en ce que le véhicule (1) est un véhicule sur chenilles.

17. Dispositif selon la revendication 3, caractérisé en ce que le moteur d'entraînement (23) pour l'arbre (14), se trouve sur le châssis cabine (6) pivotant, et est relié à l'arbre (14) par l'intermédiaire d'un dispositif de transmission d'efforts, flexible.

18. Dispositif selon la revendication 17, caractérisé en ce que le dispositif de transmission d'efforts, flexible, est un arbre de transmission (20) comportant deux joints articulés de Cardan (18, 19), entre lesquels l'arbre de transmission (20) est constitué de deux tubes (20a, 20b) coulissant l'un dans l'autre de manière télescopique et possédant un profil polygonal.

FIG.1

EP 0 245 780 B1

FIG. 2

FIG. 3

FIG.4

FIG.5

## FIG.6

20
20a
20b

30
17
25
15
26
23

## FIG.7